# FASCICULE DE BREVET EUROPEEN

(11) **EP 0 949 217 B1**
(45) Date de publication et mention de la délivrance du brevet: **14.11.2007**
(21) Numéro de dépôt: 99440069.5
(22) Date de dépôt: 06.04.1999
(51) Int. Cl.: C04B 18/14, C04B 20/02, B02C 19/18, C09C 3/04

(54) **Procédé de désagrégation ou de désagglomération d'amas particulaires et procédé de préparation d'un béton ou d'un mortier**
Verfahren zum Trennen oder Deagglomerieren von Teilchencluster und Verfahren zur Beton oder Moertel Herstellung
Process for disintegrating or deagglomerating particle clusters and process for preparing concrete or mortar

(30) Priorité: 06.04.1998 FR 9804515
(43) Date de publication de la demande: 13.10.1999
(73) Titulaire: SAFES REALISATIONS, 94350 Villiers-sur-Marne (FR); Pozzetto, Jacques, 75007 Paris (FR)
(72) Inventeur: Pozzetto, Jacques, 75007 Paris (FR)
(74) Mandataire: Nuss, Pierre

(56) Documents cités:
- EP-A- 0 275 607
- EP-A- 0 518 777
- WO-A-92/12790
- DE-A- 3 339 868
- DE-A- 19 614 136
- US-A- 2 410 954
- CHEMICAL ABSTRACTS, vol. 122, no. 16, 17 avril 1995 (1995-04-17) Columbus, Ohio, US; abstract no. 195157z, FOUNDATION FOR RESEARCH SCIENCE & TECHNOLOGY: page 535; XP000660552 & IND. RES. LTD. REP.,1944, page 244
- DATABASE WPI Week 8909 Derwent Publications Ltd., London, GB; AN 89-063777 XP002087225 & JP 01 014142 A (MITSUBISHI MINING & CEMENT CO)
- CHEMICAL ABSTRACTS, vol. 106, no. 8, 23 février 1987 (1987-02-23) Columbus, Ohio, US; abstract no. 54902w, E. SAKAI ET AL.: page 303; XP002087224 & JP 61 222949 A (ID.)

## Description

La présente invention concerne le domaine des matériaux granulaires ou pulvérulents, notamment ceux mis en oeuvre pour constituer les fines dans les bétons et les mortiers et plus généralement ceux utilisés de manière générique ou particulière comme charge minérale pour la préparation de nombreux produits industriels.

La présente invention concerne les objets suivants : (i) un procédé de désagrégation ou de désagglomération d'amas particulaires présents dans les matériaux précités, procédé applicable dans toutes les activités industrielles utilisant ou susceptible d'utiliser de tels matériaux et (ii) un procédé de préparation d'un béton ou d'un mortier.

Dans de nombreux domaines techniques utilisant des matériaux pulvérulents, la formation d'amas ou de conglomérats de particules élémentaires réduit les performances et la qualité des procédés les mettant en oeuvre et des produits obtenus (incidences sur la rhéologie, la maniabilité, la fluidité, la réactivité, les surfaces réactives, la valeur d'usage [notamment la résistance pour les bétons], etc).

Tel est notamment le cas pour les matériaux siliceux ou à base de silice, tel que notamment les fumées de silice de toutes origines (y compris les fumées obtenues comme sous-produits de l'industrie du silicium, du ferro-silicium, du zirconium et du hafnium) ou certaines silices précitées, constituant des produits d'apport de charges minérales pulvérulentes ou fines, en particulier dans la préparation des bétons ou mortiers à hautes performances.

La plupart des fumées de silice et certaines silices précipitées, dans l'état où elles sont produites et commercialisées, sont constituées pour l'essentiel de particules submicroniques (taille inférieure au µm), mais un grand nombre de ces particules sont agglomérées en amas dont la taille est de l'ordre de 20 à 40 µm, voir plus.

Typiquement, la proportion de particules submicroniques représente 20 % ou même moins de la masse des produits (fumées de silice ou silice précipitée) commercialement disponibles. Les liaisons inter-particulaires donnant naissance aux agglomérats sont des liaisons fortes. Malgré de nombreuses tentatives, aucun procédé n'a pu être mis au point pour permettre de casser ces liaisons dans des conditions économiquement viables, et les techniques de classification permettant de séparer les particules submicroniques conduisent à des prix de revient inacceptables pour la plupart des applications.

En conséquence, on ne peut pas, en général optimiser les apports de charges submicroniques : bien que souvent très important, le gain technico-économique potentiellement induit par une telle optimisation est actuellement néanmoins inférieur aux coûts de revient de telles charges comprenant majoritairement des particules libres.

Par le document Chemical Abstracts, Vol. 122, n° 16, 17-04-1995, Abstract n° 195157z (Foundation for Research, Science and Technology, Columbus, Ohio, USA), on connaît un procédé de désagrégation pouvant être mis en oeuvre en laboratoire et utilisant l'application d'ultrasons sur le matériau à désagréger.

Le problème posé à la présente invention consiste par conséquent à proposer une solution pour permettre la réalisation d'un traitement de désagrégation ou de désagglomération applicable à l'échelle industrielle, économique à mettre en oeuvre et fournissant une désagrégation stable des matériaux pulvérulents traités, notamment siliceux ou à base de silicium.

Le problème précité est résolu par le procédé selon la revendication 1 annexée.

Selon un mode de réalisation préféré de l'invention, le matériau à traiter est dispersé ou mis en suspension dans de l'eau, qui circule, de manière continue ou discontinue, à travers une enceinte d'application des ondes ultrasonores, tel que par exemple un réacteur ultrasonique tubulaire.

Ce réacteur peut, par exemple, être du type décrit dans le document EP-A-0 567 579 et commercialisé sous la dénomination "SONITUBE" par la société SODEVA, dont le rendement énergétique et l'applicabilité industrielle sont particulièrement avantageux.

Préférentiellement, compte tenu des résultats expérimentaux obtenus par l'inventeur, la concentration de la dispersion formant boue, exprimée en rapport pondéral matériau à traiter/liquide de dispersion, est comprise entre 0,8/1 et 3,5/1, en fonction notamment de la nature du matériau à traiter, ladite boue étant éventuellement asséchée, par exemple par évaporation, après son passage dans l'enceinte d'application des ultrasons.

Dans le cas particulier où le matériau à traiter est un matériau minéral siliceux ou à base de silicium, tel que par exemple des fumées de silice, il peut être avantageusement prévu que les ondes ultrasonores soient appliquées au matériau à traiter avec une intensité et pendant une durée suffisante pour que ledit matériau présente, après traitement, une proportion pondérale de particules submicroniques supérieure à 60 %, préférentiellement supérieure ou égale à environ 70 %.

La formation et le maintien de l'émultion ou de la dispersion peuvent être favorisés par l'addition de composés chimiques tels que des surfactants et des dispersants ioniques ou non ioniques, métaphosphate de sodium et de potassium, tergitols teepol, naphtalène, polynaphtalène sulfoné, etc, le choix desdits composés dépendant des produits à disperser et des applications envisagées (ces composés ne devant notamment pas affecter la qualité et les propriétés des produits finaux).

Le tableau 1 ci-après illustre les résultats obtenus en traitant une dispersion aqueuse de fumées de silice dans un réacteur du type décrit dans le document EP-A-0 567 579, la dispersion présentant un rapport pondéral fumées / eau de 1/1.

**Tableau 1**

| Durée | D(V, 0,5) | D(V,0,9) | Passants à 1.06 µm |
|---|---|---|---|
| initial | 4,24 µm | 15,31 µm | 25,58 % |
| 30 s | 0,81 µm | 4,43 µm | 59,01 % |
| 1 min | 0,67 µm | 2,40 µm | 68,87 % |
| 1 min 30 s | 0,65 µm | 2,18 µm | 70,91 % |
| 2 min | 0,61 µm | 2,13 µm | 72,27 % |
| 2 min 30 s | 0,59 µm | 1,98 µm | 74,53% |
| 3 min | 0,59 µm | 2,06 µm | 73,51 % |

Le tableau 2 ci-après illustre les résultats obtenus en traitant une dispersion aqueuse de fumées de silice dans un réacteur du type décrit dans le document EP-A-0 567 579, la dispersion présentant un rapport pondéral fumées / eau de 3/1.

Le tableau 2 contient en fait les résultats de deux séries de traitement distinctes (la première série correspondant aux données de gauche dans les colonnes de ce tableau et la seconde série correspondant aux données de droite dans ces mêmes colonnes), effectuées sur des dispersions initiales distinctes (mais toutes deux avec un rapport 3/1).

**Tableau 2**

| Durée | D(V. 0.5) | D(V, 0.9) | Passants à 1,06 µm |
|---|---|---|---|
| initial | 0,96 µm / 1,19 µm | 15,67 µm / 19,50 µm | 52,86 % / 47,18 % |
| 30 s | 0,74 µm / 0,96 µm | 4,30 µm / 17,46 µm | 62,60 % / 52,85 % |
| 1 min | 0,72 µm / 0,70 µm | 4.11 µm / 3.67 µm | 63,37 % / 64,43 % |
| 1 min 30 s | 0,67 µm / 0,70 µm | 2,74 µm / 3.11µm | 67,25 % / 65,48 % |
| 2 min | 0,64 µm / 0,68 µm | 2,30 µm / 2,80 µm | 70,03 % / 67,03 % |
| 2 min 30 s | 0,62 µm / 0,65 µm | 2,21 µm / 2,44 µm | 71,13 % / 69,02 % |
| 3 min | 0,58 µm / 0,65 µm | 1,94 µm / 2, 34 µm | 74.,88 % / 69,93 % |

En analysant sur les deux tableaux ci-dessus l'évolution de la désagglomération (représenté par les passants à 1,06 µm) en fonction de la durée du traitement, on remarque une réduction régulière et sensible de la granulométrie des particules de silice présents dans la dispersion traitée (très nette pour D(V, 0,9)).

On observe un meilleur rendement et une plus grande efficacité énergétique pour la dispersion 3/1 et un ratio résultats / coûts optimisé pour une durée de traitement autour de 2 min.

La puissance globale absorbée, pour un volume de 0,8 l de dispersion, par le réacteur utilisé (du type "SONITUBE") variait entre 1,6 kW en début de traitement et 0,8 kW après deux minutes de traitement.

L'énergie totale absorbée par ledit réacteur en fonction de la quantité de matériau traité est d'environ 70 kWh/tonne.

La fréquence des ondes ultrasonores délivrées par l'appareil de traitement était de 20,15 kHz. Toutefois, il a été constaté que le rendement de l'appareil pouvait être optimisé en faisant varier la fréquence d'excitation dans une plage de 19,75 à 20,50 kHz de manière à obtenir un couplage maximum en fonction de l'évolution de la fréquence de résonnance au cours de la désagrégation des particules agglomérées.

Par ailleurs, en ce qui concerne l'influence du vieillissement du matériau traité, il a été constaté à peine 2 % de réduction du pourcentage de passants à 1,06 µm pour une dispersion 3/1 traitée pendant 2 min, ce après plus de quatre mois de stockage.

On ne note par conséquent aucune réagrégation sensible.

Selon des variantes de réalisation de l'invention, il peut être prévu que le matériau à traiter soit propulsé à travers un canal d'application des ondes ultrasonores où le matériau à traiter soit amené, par exemple sous l'effet de la pesanteur, à traverser en couche mince, et préférentiellement en flux laminaire, l'intervalle entre un élément formant marteau vibrant à une fréquence ultrasonore et une enclume correspondante, le marteau et l'enclume pouvant par exemple présenter des formes tronconiques sensiblement complémentaires orientées sensiblement verticalement.

La présente invention a également pour objet un procédé de préparation d'un béton ou d'un mortier selon la revendication 7.

Avantageusement, le procédé de désagglomération est appliqué au matériau siliceux ou à base de silicium dans des conditions telles que la portion de matériau siliceux ou à base de silicium traité présente une proportion pondérale de particules submicroniques libres supérieure à 55 %, préférentiellement supérieure à 65 %.

Enfin, l'invention concerne également un béton ou de mortier comprenant notamment au moins un matériau siliceux ou à base de silicium, caractérisé en ce que ledit matériau ou au moins l'un desdits matériaux siliceux ou à base de silicium renferme une proportion pondérale de particules submicroniques libres supérieure à 55 %, préférentiellement supérieure à 65 %, obtenue notamment par l'intermédiaire d'un procédé de traitement tel que mentionné ci-dessus.

Une vérification des propriétés des mortiers renfermant un matériau tel que décrit ci-dessus, a permis de constater une augmentation de 20 à 30 % de la fluidité, et donc de la maniabilité du mortier, déterminée par les procédés de mesure de fluidité ou d'écoulement traditionnels (par exemple "flow-test" ou rhéomètre), ainsi qu'une augmentation de 25 à 38 % de la résistance à la compression dudit mortier après rigidification

Cette dernière caractéristique peut notamment s'expliquer par l'augmentation importante de la surface de réaction des particules constituant le matériau siliceux ou à base de silicium traité et par le fait que les particules submicroniques s'insèrent entre les grains de ciment et augmentent ainsi la compacité du mortier et, donc, sa résistance.

Selon un mode de réalisation particulièrement préférentiel la proportion pondérale de particules submicroniques libres dudit matériau est supérieure ou égale à environ 70 %.

De manière avantageuse, le matériau siliceux ou à base de silicium consiste en de la fumée de silice, notamment de synthèse ou en tant que sous-produit de l'industrie du silicium, du ferro-silicium, du zirconium ou du hafnium.

En effet, dans le cadre de l'élaboration de béton ou de mortier à base de ciment dit Portland, la fumée de silice peut réagir, avec une efficacité accrue du fait de l'augmentation de la surface de réaction, avec la portlandite formée lors de l'hydratation pour engendrer une quantité supplémentaire de silicate de calcium hydraté, ce qui a pour effet d'accroître sensiblement à la fois la résistance mécanique, l'imperméabilité et la durabilité du mortier ou béton après solidification.

Par ailleurs, il convient également de noter que le matériau siliceux ou à base de silice trouvera une application particulièrement intéressante dans le cadre de la réalisation de bétons ou de mortiers de poudres réactives, mais également en tant que charges minérales dans des matériaux plastiques et élastiques, des produits cosmétiques ou autres.

Les propriétés avantageuses conférées par le traitement de désagrégation conforme à l'invention peuvent également être mises en évidence par le fait qu'il rend possible l'utilisation de fumées de silice standards en lieu et place de fumées de silice d'écoulant de l'industrie du zirconium (nettement plus chères).

Ainsi, pour le mélange de béton à très haute performance suivant :
- 50 kg de ciment HTS (de la société LAFARGE),
- 12 kg de fumées de silice,
- 13 kg de sable SIFRACO C400 (nom déposé),
- 65 kg de sable SIFRACO BE31 (nom déposé),
- 0,98 kg d'adjuvant (extrait sec), par exemple du type MAPEFLUID X404 (nom déposé),
et avec un rapport E/C égal à 0,19, ce béton ne peut être malaxé (le béton ne se "mouille" pas) si l'on utilise des fumées de silice standards non traitées.

Jusqu'à présent, la seule possibilité pour former le béton visé consistait à utiliser des fumées de silice produites par l'industrie du zirconium.

Par contre, en substituant ces dernières par des fumées de silice standards traitées selon l'invention, on obtient un béton très maniable (avec un prix de revient des fumées de silice standards traitées environ sept fois moins cher que les fumées de silice produites par l'industrie du zirconium).

## Revendications

1. Procédé de désagrégation ou de désagglomération d'amas particulaires présents dans des matériaux pulvérulents ou granulaires, formant charge minérale, consistant essentiellement à soumettre le matériau à traiter à des ondes ultrasonores présentant une fréquence et une puissance prédéterminées, procédé **caractérisé en ce qu'**il consiste à disperser ou à mettre en suspension le matériau à traiter, du type minéral siliceux ou à base de silicium, dans un liquide non dissolvant et non réagissant, avec un rapport pondéral matériau à traiter/liquide de dispersion compris entre 0,8/1 et 3,5/1, préférentiellement d'environ 3/1 et à faire circuler la dispersion ou suspension obtenue à travers une enceinte d'application des ondes ultrasonores, de manière à ce que ledit matériau soit soumis aux ondes ultrasonores précitées, dont la fréquence d'excitation est mise à variée dans une plage de 19,75 à 20,50 kHz, en fonction de l'évolution de la fréquence de résonance au cours de la désagrégation des particules agglomérées pendant une durée suffisante pour aboutir à un matériau dont la granulométrie répond au moins au paramètre de répartition correspondant à une proportion pondérale de particules submicroniques supérieure à 60 %.

2. Procédé selon la revendication 1, **caractérisé en ce que** le matériau à traiter est dispersé ou mis en suspension dans de l'eau, qui circule, de manière continue ou discontinue, à travers un réacteur ultrasonique tubulaire.

3. Procédé selon la revendication 2, **caractérisé en ce que** la dispersion formant boue est éventuellement asséchée, par exemple par évaporation, après son passage dans l'enceinte d'application des ultrasons.

4. Procédé selon l'une quelconque des revendications 1 à 3, **caractérisé en ce que** la durée de traitement est d'environ 2 minutes, pour une énergie absorbée par l'enceinte d'application d'environ 70 Wh/kg.

5. Procédé selon l'une quelconque des revendications 1 à 4, **caractérisé en ce que** la formation et le maintien de la suspension ou de la dispersion sont favorisés par l'addition de composés chimiques.

6. Procédé selon l'une quelconque des revendications 1 à 5, **caractérisé en ce que** les ondes ultrasonores sont appliquées au matériau à traiter avec une intensité et pendant une durée suffisante pour que ledit matériau présente, après traitement, une proportion pondérale de particules submicroniques supérieure ou égale à environ 70 %.

7. Procédé de préparation d'un béton ou d'un mortier comprenant notamment au moins un matériau siliceux ou à base de silicium, **caractérisé en ce qu'**au moins une partie d'au moins un matériau minéral siliceux ou à base de silicium est traité, préalablement à son incorporation dans le mélange destiné à former le béton ou le mortier précité, par l'intermédiaire du procédé selon l'une quelconque des revendications 1 à 6 et **en ce que** ledit matériau silicieux ou à base de silicium est incorporé dans le mélange destiné à former le béton ou mortier entant que dispersion formant boue avec une concentration comprise entre 0,8/1 et 3,5/1, préférentiellement d'environ 3/1, exprimée en rapport pondéral matériau à traiter/liquide de dispersion.

8. Procédé selon la revendication 7, **caractérisé en ce que** la portion de matériau siliceux ou à base de silicium traité présente une proportion pondérale de particules submicroniques libres supérieure à 55 %, préférentiellement à 65 %.

## Claims

1. Process for the disaggregation or disagglomeration of particulate lumps present in powdered or granular materials that form a mineral filler, which consists essentially in subjecting the material to be treated to ultrasonic waves of predetermined frequency and power, the said process being **characterised in that** it consists in dispersing or suspending the material to be treated, of a silicaceous or silicon-based type, in a liquid that does not dissolve or react with it, with a ratio by weight of material to be treated / dispersion liquid between 0.8/1 and 3.5/1, preferably about 3/1, and circulating the dispersion or suspension obtained through a cavity in which the ultrasonic waves are applied, in such manner that the said material is subjected to the said ultrasonic waves, whose excitation frequency can be varied within a range between 19.75 and 20.50 kHz, for a time sufficient to produce a material whose particle size conforms at least to a distribution parameter corresponding to a proportion by weight of sub-micron particles larger than 60%.

2. Process according to Claim 1, **characterised in that** the material to be treated is dispersed or suspended in water, which circulates continuously or discontinuously through a tubular ultrasonic reactor.

3. Process according to Claim 2, **characterised in that** the dispersion forming a sludge is if necessary dried, for example by evaporation, after passing through the cavity in which the ultrasound is applied.

4. Process according to any of Claims 1 to 3, **characterised in that** the duration of the treatment is approximately 2 minutes for an energy absorbed by the application cavity equal to approximately 70 Wh/kg.

5. Process according to any of Claims 1 to 4, **characterised in that** the formation and maintenance of the suspension or dispersion are promoted by the addition of chemical compounds.

6. Process according to any of Claims 1 to 5, **characterised in that** the ultrasonic waves are applied to the material to be treated with an intensity and for a time sufficient for the said material, after, treatment, to have a proportion by weight of sub-micron particles larger than or equal to about 70%.

7. Process for the preparation of a concrete or mortar containing in particular at least one silicaceous or silicon-based material, **characterised in that** at least part of at least one silicaceous or silicon-based material is treated by the process according to any of Claims 1 to 6 before being incorporated in the mix intended to for the said concrete or mortar, and **in that** the said silicaceous or silicon-based material is incorporated in the mix intended to form the concrete or mortar as a dispersion that forms a sludge with a concentration between 0.8/1 and 3.5/1, preferably around 3/1, expressed as the ratio by weight of material to be treated / dispersion liquid.

8. Process according to Claim 7, **characterised in that** the portion of silicaceous or silicon-based material treated contains a proportion by weight of free sub-micron particles larger than 55% and preferably larger than 65%.

## Patentansprüche

1. Verfahren zum Auflösen oder Entklumpen einer Teilchenmasse, die in pulverigen oder granularen mineralischen Materialien vorhanden ist, wobei dieses darauf beruht, das zu behandelnde Material Ultraschallwellen mit einer vorbestimmten Frequenz und Leistung auszusetzen, wobei das Verfahren **dadurch gekennzeichnet ist, dass** dieses darauf beruht, das zu behandelnde Material, in der Art eines siliziumhaltigen oder auf Silizium basierenden Minerals in einer nicht lösenden oder nicht reagierenden Flüssigkeit zu dispergieren oder in Suspension zu bringen, mit einer gewichtsanalytischen Beziehung von zu behandelndem Material/Dispersionsflüssigkeit zwischen 0,8/1 und 3,5/1, vorzugsweise etwa 3/1, und die erhaltene Dispersion oder Suspension durch einen Beaufschlagungsraum für Ultraschallwellen in der Weise in Zirkulation zu bringen, dass das Material den vorgenannten Ultraschallwellen ausgesetzt wird, deren Anregungsfrequenz in einem Bereich von 19,75 bis 20,50 kHz variiert wird, und zwar in Abhängigkeit von der Entwicklung der Resonanzfrequenz im Verlauf der Entklumpung der zusammenhängenden Teilchen, während einer Zeitdauer, die ausreicht, um zu einem Material zu führen, dessen Korngrößenverteilung bei einem gewichtsanalytischen Anteil von Teilchen im Submikronbereich über 60% wenigstens einem vorbestimmten Verteilungsparameter entspricht.

2. Verfahren nach Anspruch 1, **dadurch gekennzeichnet, dass** das zu behandelnde Material in Wasser dispergiert oder in Suspension gebracht wird, welches in kontinuierlicher oder diskontinuierlicher Weise durch einen rohrförmigen Ultraschallreaktor hindurch zirkuliert.

3. Verfahren nach Anspruch 2, **dadurch gekennzeichnet, dass** der dispergierte Schlamm gegebenenfalls nach seinem Eintritt in den Raum zur Beaufschlagung mit Ultraschall entwässert wird, zum Beispiel durch Verdampfung.

4. Verfahren nach einem der Ansprüche 1 bis 3, **dadurch gekennzeichnet, dass** die Behandlungsdauer etwa 2 Minuten beträgt für eine Energieaufnahme durch den Beaufschlagungsraum von etwa 70 Wh/kg.

5. Verfahren nach einem der Ansprüche 1 bis 4, **dadurch gekennzeichnet, dass** die Bildung und die Beibehaltung der Suspension oder der Dispersion durch die Zugabe von chemischen Verbindungen begünstigt werden.

6. Verfahren nach einem der Ansprüche 1 bis 5, **dadurch gekennzeichnet, dass** die Ultraschallwellen auf das zu behandelnde Material mit einer Intensität und während einer Zeitspanne aufgebracht werden, die ausreicht, dass das Material nach der Behandlung einen gewichtsanalytischen Anteil von Teilchen im Submikronbereich von über 60%, vorzugsweise größer oder gleich etwa 70%, aufweist.

7. Verfahren zur Zubereitung von Beton oder eines Mörtels mit insbesondere wenigstens einem kieselsäurehaltigen oder auf Silizium basierenden Material, **dadurch gekennzeichnet, dass** wenigstens ein Teil von wenigstens einem kieselsäurehaltigen oder auf Silizium basierenden Material vor seiner Einführung in das Gemisch, das zum Bilden des vorgenannten Betons oder Mörtels bestimmt ist, mit Hilfe des Verfahrens gemäß einem der Ansprüche 1 bis 6 behandelt wird und **dadurch**, dass das siliziumhaltige oder auf Silizium basierende Material in das Gemisch eingebaut wird, das dazu bestimmt ist, den Beton oder den Mörtel zu bilden, insofern der dispergierte Schlamm eine Konzentration zwischen 0,8/1 und 3,5/1, vorzugsweise ungefähr 3/1 hat, ausgedrückt in einem gewichtsanalytischen Verhältnis von zu behandelndem Material/Dispersionsflüssigkeit.

8. Verfahren nach Anspruch 7, **dadurch gekennzeichnet, dass** der Teil des kieselsäurehaltigen oder auf Silizium basierenden, behandelten Materials einen gewichtsanalytischen Anteil von freien Teilchen im Submikronbereich von über 55%, vorzugsweise 65%, aufweist.
